(19) Europäisches Patentamt
European Patent Office
Office européen des brevets

(11) **EP 2 456 150 A1**

(12) **EUROPEAN PATENT APPLICATION**

(43) Date of publication:
**23.05.2012 Bulletin 2012/21**

(21) Application number: **10185345.5**

(22) Date of filing: **01.10.2010**

(51) Int Cl.:
*H04L 25/02* $^{(2006.01)}$     *H04L 25/03* $^{(2006.01)}$
*H04L 1/06* $^{(2006.01)}$

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME**

(71) Applicants:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO SE SI SK SM TR**

(72) Inventors:
• **Boutier, Arnaud**
**35708, RENNES Cedex 7 (FR)**
• **Vercasson, Guillaume**
**35708, RENNES Cedex 7 (FR)**

(74) Representative: **Maillet, Alain**
**Cabinet Le Guen Maillet**
**5, place Newquay**
**B.P. 70250**
**35802 Dinard Cedex (FR)**

(54) **Pre-scaling method and apparatus for improving the performance of MIMO MMSE decoders**

(57) Pre-scaling method for improving the performance of MIMO MMSE decoders against fixed-point implementation degradations.

The invention aims to solve these problems by applying a pre-scaling to the MIMO decoder inputs so as to minimize the degradations due to fixed-point computations while leaving unchanged the remaining part of the decoder. The invention is particularly well suited for decoders that are due to support several multi-antenna schemes going from the basic SIMO schemes, including SISO, STBC schemes like the Alamouti code and eventually more advanced and flexible codes.

Fig. 5

EP 2 456 150 A1

**Description**

The present invention generally relates to a pre-scaling method for improving the performance of Multiple Input Multiple Output Minimum Mean Square Error decoders, in short MIMO MMSE decoders against fixed-point implementation degradations.

In digital transmissions, information bits are transmitted periodically in time as a stream of encoded symbols. After transmission through the channel, these symbols are affected by noise and linear degradations such as fading or inter-symbol interference. MIMO transmission schemes aims to improve the quality of the received signal by exploiting spatial diversity.

The signal to be transmitted is spread over the number of available antennas using diversity codes. Several diversity codes have been designed based on the minimization of the pair-wise error probability (Space Time Trellis Code, Space Time Block Code, Orthogonal STBC, full rank STBC) or the maximization of the mutual information (linear dispersion STBC), where STBC stands for Space Time Bloc Code.

In practice, many systems rely on MIMO schemes where information bits are first encoded according to traditional SISO techniques. The MIMO encoding consists in interleaving and multiplexing the SISO symbols onto the $N_T$ antennas. It is thus possible to rely on low-complexity schemes, based on separated linear space-time equalization followed by standard single input single-output (SISO) decoding. Note that this approach also applies to multiplexing MIMO schemes.

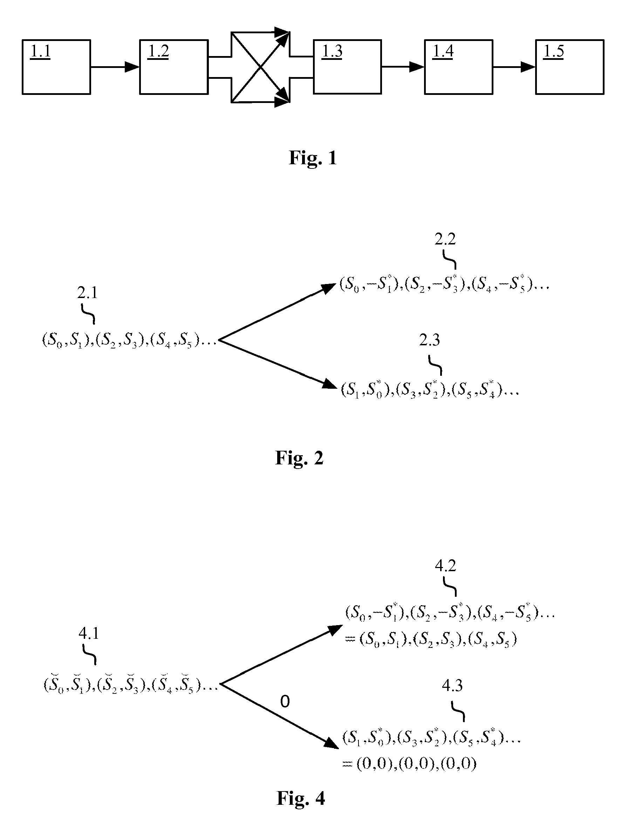

For example, a popular OSTBC for two antennas is the Alamouti code as follow. Denote two symbols to be $s_0$ and $s_1$. In the first symbol interval, transmit $s_0$ from the antenna #0 and $s_1$ from the antenna #1. In the next symbol interval, transmit ($-s_1^*$) from antenna #0 and ($s_0^*$) from antenna #1 where the superscript ( )* represents complex conjugation.Fig. 1 illustrates this approach. The 1.1 bloc is implementing SISO encoding of the symbols. The 1.2 bloc realizes the MIMO scheme, for example Alamouti. The signal is then transmitted from the two emitting antennas to the two receiving antennas. The 1.3 bloc is the linear receiver. The inverse of the MIMO code is then applied by the 1.4 bloc. The 1.5 bloc realizes the SISO decoding.

MIMO decoding implies complex matrix computation. For example, in case of a Zero Forcing receiver, it can be shown that the equalization matrix is given by:

$$W_{ZF} = \left(H^H H\right)^{-1} H^H$$

where $H$ is the vector of the channel coefficients associated to the transmitting antennas, see for example the article "The Diversity-Multiplexing Tradeoff of Linear MIMO Receivers" in Proc. IEEE Information Theory Workshop (ITW '07), Lake Tahoe, Sep. 2007 by K. Raj Kumar, Giuseppe Caire and Aris L. Moustakas.

In case of a MMSE decoder, the equalization matrix is given by :

$$W_{MMSE} = \left(H^H H + \frac{\sigma_b^2}{\sigma_s^2} I_{N_R}\right)^{-1} H^H$$

Both cases require some matrix inversion.

Implementation of MIMO decoders on digital circuits such as ASIC, FPGA, for example, usually implies fixed-point arithmetic for these formulas. These operations are known to be rather complex even if computationally efficient techniques are available to avoid the brut inversion of the matrix.

Recent systems relying on MIMO schemes usually support many different physical modes to comply with various requirements in terms of robustness and spectral efficiency. This applies also to MIMO schemes where the receiver is due to support several multi-antenna schemes going from the basic SIMO schemes (including SISO), STBC schemes like the Alamouti code and eventually more advanced and flexible codes. To reduce the complexity of the receivers, it is desirable to design generic MIMO decoders compatible with multiple schemes instead of parallelizing several independent decoders. A typical illustration is to allow SISO decoding using the MMSE for the Alamouti $2\times1$ code. As shown in the sequel, the MMSE MIMO decoder requires the inversion of a $2\times2$ complex Hermitian matrix. For such a basic matrix, the inversion can be performed by simply dividing the matrix of cofactors by the determinant. As shown in the sequel, the decoder can easily be modified to decode SISO transmissions using the $2\times2$ inversion module. The issue is that the different computational elements of the decoder do not operate over the same range of values in terms of dynamics and precision. Satisfying both needs with a good level of performance would require either to handle very large binary words for internal computations or to implement dynamically reconfigurable scaling modules. Both solutions come at the expense of an increased complexity and thus power consumption. It is proposed here to apply a pre-scaling to the MIMO decoder inputs so as to minimize the degradations due to fixed-point computations while leaving unchanged the remaining part of the decoder.

The invention aims to solve these problems by applying a pre-scaling to the MIMO decoder inputs so as to minimize the degradations due to fixed-point computations while leaving unchanged the remaining part of the decoder. The invention is particularly well suited for decoders that are due to support several multi-antenna schemes going from the basic SIMO schemes, including SISO, STBC schemes like the Alamouti code and eventually more advanced and flexible codes.

The invention concerns a method to decode received symbols in a multi-mode MIMO decoder comprising a step (5.15) to calculate a scaling factor to equalize the amplitude of the input sample; a first scaling step (5.13) consisting of multiplying the input value of the channel by the scaling factor; a second scaling step (5.16) consisting of multiplying the input observations by the scaling factor and a third scaling step (5.2) consisting of multiplying the noise variance by the scaling factor, in order to selectively pre-scale the small input samples so as to bring them in a range that is less affected by the quantization noise amplification effect due to the inversion.

According to a particular embodiment, the scaling factor is as a function of a reference value of the transmission channel and the current value of said transmission channel.

According to a particular embodiment, the scaling factor is the maximum of the value 1 and the rounded by lower value of the square root of the average of the square of the coefficients of the current channel divided by the square of said reference value.

The invention also concerns a multi-mode MIMO decoder comprising means to calculate a scaling factor to equalize the amplitude of the input sample; a first scaling means to multiply the input value of the channel by the scaling factor; a second scaling means to multiply the input observations by the scaling factor and a third scaling means to multiply the noise variance by the scaling factor.

The characteristics of the invention will emerge more clearly from a reading of the following description of an example embodiment, the said description being produced with reference to the accompanying drawings, among which:

Fig. 1 illustrates an example of MIMO transmission chain.
Fig. 2 illustrates the Alamouti code.
Fig. 3 illustrates an MMSE decoder.
Fig. 4 illustrates decoding of SISO transmission by using the Alamouti decoder.
Fig. 5 illustrates the method according to the example embodiment.

Without loss in generality, let's consider the case of a MMSE decoder for the Alamouti 2×1 MIMO scheme. The Alamouti code belongs to the family of the OSTBC where a couple of useful symbols are transmitted over two antennas and two symbol intervals as shown on Fig. 2, where 2.1 represents the symbols to be transmitted, 2.2 the symbols actually transmitted on the first antenna and 2.3 the symbols actually transmitted on the second one.

It is common to describe the encoding using the following encoding matrix where the columns represent the antennas and the lines the symbol periods:

$$S = \begin{bmatrix} s_0 & s_1 \\ -s_1^* & s_0^* \end{bmatrix}$$

The matrix form is more natural as it generally leads to an easier representation of the encoding process itself. On the other hand, the vector form is more appropriate for the representation of the decoding. In the sequel, the vector form is derived from the matrix by superposition of the columns, i.e. if $S$ and $s_v$ are respectively the matrix and vector representation of the encoded data, then:

$$s_v = \begin{bmatrix} s_0 \\ s_1 \\ -s_1^* \\ s_0^* \end{bmatrix}$$

Assuming a single receive antenna, the observations associated to the two symbol periods are given by:

$$r = \begin{bmatrix} r_0 \\ r_1 \end{bmatrix} = \begin{bmatrix} h_{00} & h_{10} & 0 & 0 \\ 0 & 0 & h_{01} & h_{11} \end{bmatrix} \begin{bmatrix} s_0 \\ s_1 \\ -s_1^* \\ s_0^* \end{bmatrix} + \begin{bmatrix} b_0 \\ b_1 \end{bmatrix} = \begin{bmatrix} H_0 & 0_{[2\times1]} \\ 0_{[2\times1]} & H_1 \end{bmatrix} \begin{bmatrix} s_0 \\ s_1 \\ -s_1^* \\ s_0^* \end{bmatrix} + \begin{bmatrix} b_0 \\ b_1 \end{bmatrix} = Hs_v + b$$

Where $\{b_i, i=0,1\}$ are two uncorrelated AWGN processes with variance $\sigma^2$. In the case of the Alamouti scheme, the codeword only carries 2 information data. It is therefore more appropriate to express the observation as a function of these two input samples. This can be done as follows:

$$r = \begin{bmatrix} r_0 \\ r_1 \end{bmatrix} = \begin{bmatrix} H_0 \begin{bmatrix} s_0 \\ s_1 \end{bmatrix} \\ H_1 \begin{bmatrix} 0 & -1 \\ 1 & 0 \end{bmatrix} \begin{bmatrix} s_0^* \\ s_1^* \end{bmatrix} \end{bmatrix} + b$$

To simplify the derivation, a new observation vector is defined by taking the conjugate of the data corresponding to the second observation:

$$r' = \begin{bmatrix} r_0 \\ r_1^* \end{bmatrix}$$

We directly obtain:

$$r' = \begin{bmatrix} H_0 \\ H_1^* \begin{bmatrix} 0 & -1 \\ 1 & 0 \end{bmatrix} \end{bmatrix} \begin{bmatrix} s_0 \\ s_1 \end{bmatrix} + b' \overset{def}{=} D \begin{bmatrix} s_0 \\ s_1 \end{bmatrix} + b'$$

As it is a linear expression, the MMSE estimation of $s$, the emitted symbol, is simply provided by:

$$\hat{s} = \begin{bmatrix} \hat{s}_0 \\ \hat{s}_1 \end{bmatrix} = \left( \mathbf{D}^H \mathbf{D} + \sigma^2 \mathbf{I}_2 \right)^{-1} \mathbf{D}^H \mathbf{r}'$$

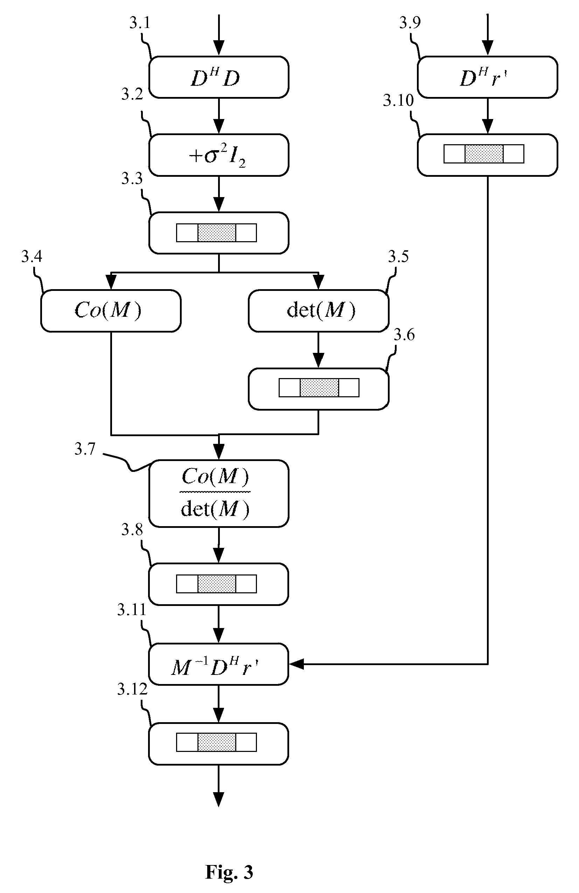

The MIMO decoder requires the computation of one matrix-matrix products, two matrix-vector products and the inversion of a Hermitian matrix. Note that thanks to the addition of the noise variance on the diagonal, the matrix is always invertible. This computation can be realized in many different ways. In the present case, the MMSE decoder is implemented according to Fig. 3.

Without losing in generality, it is assumed that the observation symbols $\{r\}$ and the channel coefficients $\{h_{ij}\}$ are complex numbers with the same fixed-point representation, namely the 2's complement representation with $N$ bits. The different stages are briefly discussed below.

In step 3.1 the product $\mathbf{D}^H\mathbf{D}$ is calculated. This is the product of two $2\times2$ matrices. Each element of the resulting matrix is a complex number encoded over $2\times N$ bits.

In step 3.9 $\mathbf{D}^H\mathbf{r}'$ is the product of a $2\times2$ matrix with a $2\times1$ vector. Each element of the resulting vector is a complex number encoded over $2\times N$ bits.

In step 3.2, the noise variance is added to the diagonal elements of the $\mathbf{D}^H\mathbf{D}$ matrix. The addition leads to one additional bit for keeping the whole dynamics. Besides the diagonal elements are positive real numbers, the elements of the matrix are encoded as complex number over $2\times N+1$ bits.

Step 3.4 consists in calculating the matrix of cofactors $Co(M)$.

Step 3.5 consists in calculating the determinant $\det(M)$.

Step 3.7 consists in calculating the inverse of the matrix $M^{-1}$. The inversion of the matrix is achieved according to basic approach that consists in dividing the matrix of cofactors by the determinant of the matrix:

$$\mathbf{M}^{-1} = \begin{bmatrix} a & b \\ c & d \end{bmatrix}^{-1} = \frac{1}{ad - bc} \begin{bmatrix} d & -c \\ -conj(b) & a \end{bmatrix} = \frac{1}{\det(\mathbf{M})} Co(\mathbf{M})$$

As the matrix $\mathbf{M}$ is Hermitian, the determinant is a positive real number. The determinant is encoded over $4\times N$ bits (always in 2's complement). The division of the matrix of cofactors by the determinant can either be computed analytically or using a memory with pre-computed values. Excepting the infinity value, the results of the division shall be encoded over the number of bits of the dividend and as many least significant bits $B$ required to obtain the expected precision. The final number of bits is given by $4\times N+B$.

Step 3.11 consists in calculating the final result $\mathbf{M}^{-1}\mathbf{D}^H\mathbf{r}'$. This is the product of a $2\times2$ matrix encoded over $(4\times N+B)$ bits with a $2\times1$ vector coded over $2\times N$ bits. Each element of the resulting matrix is a complex number with $(6\times N+B)$ bits.

As shown above, the number of bits required for keeping the whole precision and dynamics rapidly increases. This implies a higher complexity and potential timing issues when placing and routing the component. It is therefore required to reduce the number of bits used for representing the signals at different stages of the function. This operation is called a recast. The size of the numbers can be reduced either by removing LSBs, thus reducing the precision, by removing MSBs, thus reducing the overall dynamics, or both. To avoid computing issues, MSB removal is preferably performed with saturation to the highest value. Similarly, removing LSBs is preferably performed with rounding or truncating, depending on the needs and available resources. In the present case, recast is applied prior each multiplication and prior the division, the two arithmetic operations that consume a lot of resources.

Steps 3.3, 3.6, 3.8, 3.10 and 3.12 are recast steps in Fig. 3.

Let's consider the impact of the recast at the different stages of the decoder. Those recasts are achieved based on the a priori knowledge of the signal behavior in terms of dynamics and precision requirements. In the ideal case, the channel is unitary in gain. Depending on the fading, the amplitude of the channel can either go down, from 0 to -40 dB for a Rayleigh fading, or up from 0 to a few dBs. Let's consider the impact of the channel fluctuations on MIMO decoding. In that purpose, we focus on the variations of the product $\mathbf{D}^H\mathbf{D}$, the inverse $\mathbf{M}^{-1}$ and finally the product $\mathbf{M}^{-1}\mathbf{D}^H\mathbf{r}'$. It can easily be verified that the components of the matrix $\mathbf{D}^H\mathbf{D}$ behave like the channel squared modulus $|h|^2$. Similarly, it can be verified that the matrix $\mathbf{M}^{-1}$ varies like the inverse of the channel squared modulus $1/|h|^2$. Without losing in generality, the behavior of the decoder can be studied looking at the evolution of the three signals: $|h|^2$, $1/|h|^2$ and $\hat{s}$.

Considering the recast steps 3.3 and 3.10, removing MSBs may result in the saturation of the channel squared modulus. Assuming a perfect arithmetic for the remaining part of the decoder, the inverse of the squared channel coefficients would be saturated in its small values, thus preventing the decoder from perfectly equalizing the symbols with an overestimated gain.

Removing LSBs would result in a lower definition for the channel squared modulus and thus for the inverse. But as the inverse operation is not linear, the resulting quantization noise with respect to the actual inverse of the non quantized value is not constant. This is particularly true for small input values where the inverse operator rapidly decreases down to infinity. When removing one LSB, the quantization error increases more than by a factor 2. As a result, the small values are inverted with a poor precision. The compensation of the channel variation in $D^H r'$ is thus spoilt by an increased quantization noise.

The effects of the recast step 3.6 are similar to the ones described in the recast #1 step but with an impact emphasized due to the fact that the determinant varies in $|h|^4$.

Considering the recast step 3.8, the inputs of the divider are assumed ideal with a quantization applied only on its output. Removing MSBs may result in the saturation of the inverse. Assuming a perfect arithmetic for the remaining part of the decoder, this may prevent the decoder from perfectly equalizing the signal with an underestimated gain. Removing LSBs increases the level of quantization noise in the MIMO decoder output.

The recast step 3.12 is relatively easy to tune. Without any channel degradation, the MIMO decoder is due to release the transmitted symbols. It is common to saturate the output to a value equal to 2-5 times the maximum expected value. Indeed, it is much more beneficial to keep as much accuracy as possible to facilitate channel decoding.

The previous derivations show that the parameterization of the recast stages may be difficult to tune. In the case of the MIMO decoder, the recast can be achieved taking into account that the spatial diversity prevents the equivalent channel in det($M$) from reaching small values. It is thus possible to focus more on the limitation of the saturation effects.

As previously mentioned, the MIMO decoder shall also be able to handle SISO transmission with minor modifications so as to minimize the complexity. By analogy with the Alamouti scheme, SISO transmission can be interpreted as depicted on Fig. 4 where

$$\breve{S}_0 = S_0, \breve{S}_1 = -S_1^* .$$

It is thus possible to decode SISO transmission by using the Alamouti decoder with the channel coefficients associated to the second antenna forced to zero. In addition, the second sample must be conjugated and inverted to provide the expected symbol:

$$(S_0, S_1) = (\breve{S}_0, -\breve{S}_1^*)$$

The issue is here that this operation is similar to considering strictly correlated channels in the MIMO context. This means that the $M$ matrix can potentially have high components just like in MIMO but also extremely low values when the channel suffers from a deep fade. The assumption used to reduce the precision of the $M$ components does not hold any more. In other words, it is not possible to benefit from the same level of performance in SISO and MIMO with exactly the same architecture. One alternative for keeping the same bus sizes is to apply a dynamically reconfigurable recast at the expense of an increased complexity. It is an object of the invention to provide a method and apparatus which avoids or mitigates the problems of known systems described above.

The invention described in this document proposes a device and method to optimize the performance of multimode MIMO decoders against fixed-point computation degradations related to the precision dynamics tradeoff. Coming back to the example of MIMO decoder architecture described in the previous section, it was shown that the structure optimized for the Alamouti code was not able to achieve a sufficient level of performance with SISO signals. To keep low the complexity, a recast is applied at the output of the first decoder stage. The issue is that removing too much LSBs results in noisy estimates when the channel suffers from deep fades.

Indeed, for small values the reduction in accuracy is amplified by the nonlinearity of the inversion operator. It is proposed in this document to selectively pre-scale the small input samples so as to bring them in a range that is less affected by the quantization noise amplification effect due to the inversion. The pre-scaling is achieved prior the first recast steps 3.3 and 3.10. Basically, the pre-scaling is applied without modifying the fixed-point representation of the input samples. In that purpose, the coefficient is coded with the level float(1.0) mapped onto a power of $2^J$ and the samples are recast with removal of $J$ LSBs.

The pre-scaling will now be described as it is realized in the exemplar embodiment. The pre-scaling is applied on the complex values of the channel coefficients, the observations and the noise variance:

$$h_{ij}^{boost} = \alpha(h_{ij}, h^{ref}) \times h_{ij}$$

$$r_{ij}^{boost} = \alpha(h_{ij}, h^{ref}) \times r_{ij}$$

$$\sigma^{boost} = \alpha(h_{ij}, h^{ref}) \times \sigma$$

where $\alpha(h_{ij}, h^{ref})$ is ideally a real coefficient that "equalizes" the amplitude of the input sample with respect to a reference value. This reference value advantageously reduces the impact of the non-linear inversion and more globally provides a good level of overall performance. A simple solution, among others, is to select the level of the channel coefficient when there is no fading which will be called $h^{ref}$. It is the scalar value of an ideal channel taken on each component of the vector. It is supposed here that the decoder minimizes the level of quantization noise for an ideal channel. Thus, we have:

$$\alpha(h_{ij}, h^{ref}) = \sqrt{\frac{average_{ij}\left(\left|h_{ij}\right|^2\right)}{\left|h^{ref}\right|^2}}$$

Where $average_{ij}$ () is the average function over $i$ and $j$ indices.

As a matter of fact, the pre-scaling coefficient is saturated to unity as there is no point of reducing the precision brought by the values above the reference level.

$$\alpha(h_{ij}, h^{ref}) = \max\left(1, \sqrt{\frac{average_{ij}\left(\left|h_{ij}\right|^2\right)}{\left|h^{ref}\right|^2}}\right)$$

In practice, the coefficient is encoded as an integer according to the 2's complement representation. The coefficient is then obtained as:

$$\alpha(h_{ij}, h^{ref}) = \max\left[1, \sqrt{\frac{average_{ij}\left(\left|h_{ij}\right|^2\right)}{\left|h^{ref}\right|^2}}\right]_-$$

Where [ ]_ is the rounding operator by lower value.

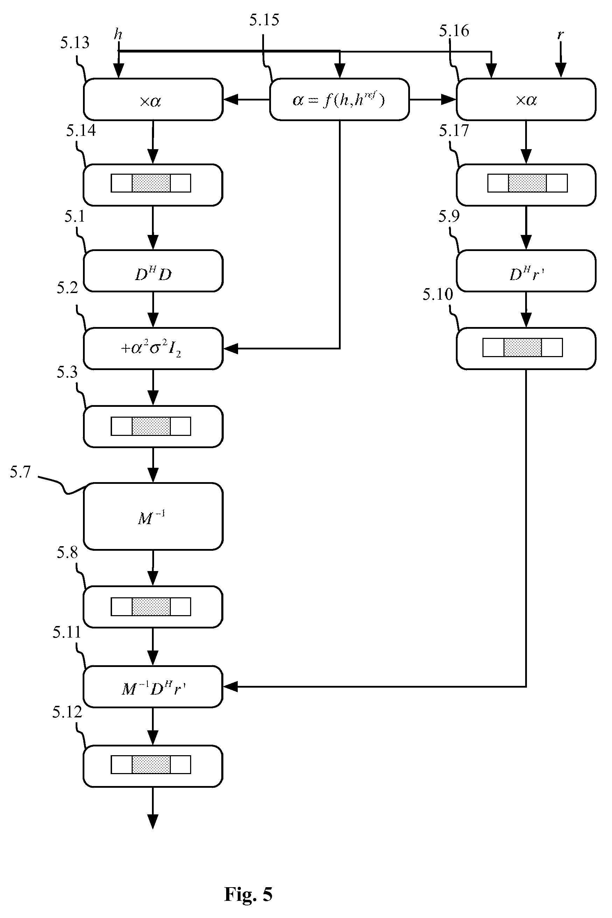

Fig. 5 illustrates the method according to the exemple embodiment. Steps 5.1 to 5.12 corresponds to similar steps 3.1 to 3.12, with step 5.7 grouping steps 3.4 to 3.7.

In step 5.15 the $\alpha$ factor is calculated as a function of the reference value $h^{ref}$ and the current coefficients of the channel. $h^{ref}$ is here one example of value relative to the *a priori* knowledge of the channel. $h^{ref}$ could also be a vector value in some embodiment while staying in the framework of the invention. This value is used in step 5.13 and 5.16 to scale the input channel value $h$ and observations $r$. The samples are recast with the removal of corresponding LSBs in steps 5.14 and 5.17. The $\alpha$ factor is also used to scale the noise variance in step 5.2.

As both the channel coefficients and the observations are multiplied by the pre-scaling coefficient, no post-scaling is needed as the effect is cancelled out by the overall operation. Indeed, we have:

$$D^{boost} = \alpha\, D$$

$$r'^{boost} = \alpha\ r'$$

$$\sigma^{boost} = \alpha\ \sigma$$

Thus:

$$\hat{s} = \frac{\alpha^2}{\alpha^2}\left(D^H D + \sigma^2 I_2\right)^{-1} D^H r'$$

$$\hat{s} = \left(\frac{D^H D}{\alpha^2} + \frac{\sigma^2 I_2}{\alpha^2}\right)^{-1} \frac{D^H r'}{\alpha^2}$$

$$\hat{s} = \left(D^{boost\,H} D^{boost} + \left(\sigma^{boost}\right)^2 I_2\right)^{-1} D^{boost\,H} r'^{boost}$$

As long as the noise variance is also scaled by the boost coefficient, no post-processing is needed. Dealing with the ideal MMSE decoder, multiplying the inputs by a real factor does not have any impact on the performance. The pre-scaling operation only intends to improve the performance of the system against fixed-point degradations. In the present case, the pre-scaling reduces the impact of the inversion on the quantization. As a result, the output samples suffer from a much smaller quantization noise.

## Claims

1. Method to decode received symbols in a multi-mode MIMO decoder **characterized in that** it comprises:

    - a step (5.15) to calculate a scaling factor to equalize the amplitude of the input sample;
    - a first scaling step (5.13) consisting of multiplying the input value of the channel by the scaling factor;
    - a second scaling step (5.16) consisting of multiplying the input observations by the scaling factor;
    - a third scaling step (5.2) consisting of multiplying the noise variance by the scaling factor;
    in order to selectively pre-scale the small input samples so as to bring them in a range that is less affected by the quantization noise amplification effect due to the inversion.

2. Method according to claim 1, **characterized in that** the scaling factor is as a function of a reference value of the transmission channel and the current value of said transmission channel.

3. Method according to claim 2, **characterized in that** the scaling factor is the maximum of the value 1 and the rounded by lower value of the square root of the average of the square of the coefficients of the current channel divided by the square of said reference value.

4. Multi-mode MIMO decoder **characterized in that** it comprises:

    - means to calculate a scaling factor to equalize the amplitude of the input sample ;
    - a first scaling means to multiply the input value of the channel by the scaling factor;
    - a second scaling means to multiply the input observations by the scaling factor;
    - a third scaling means to multiply the noise variance by the scaling factor.

**Fig. 1**

**Fig. 2**

**Fig. 4**

3.1

$D^H D$

3.2

$+\sigma^2 I_2$

3.3

3.9

$D^H r'$

3.10

3.4

$Co(M)$

3.5

$\det(M)$

3.6

3.7

$$\frac{Co(M)}{\det(M)}$$

3.8

3.11

$M^{-1} D^H r'$

3.12

**Fig. 3**

**Fig. 5**

Europäisches
Patentamt

European
Patent Office

Office européen
des brevets

# EUROPEAN SEARCH REPORT

Application Number

EP 10 18 5345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/137720 A1 (WATERS DERIC W [US] ET AL) 12 June 2008 (2008-06-12)<br>* abstract *<br>* paragraph [0002] *<br>* paragraph [0005] - paragraph [0006] *<br>* paragraph [0017] *<br>* paragraph [0019] *<br>* paragraph [0021] *<br>* paragraph [0027] *<br>* paragraph [0031] *<br>* paragraph [0033] - paragraph [0039] *<br>* claims 1-3,7,11,15,21,23; figures 1,4,5 * | 1-4 | INV.<br>H04L25/02<br>H04L25/03<br>H04L1/06 |
| | ----- | | |
| A | US 2010/027702 A1 (VIJAYAN LOGESHWARAN [IN] ET AL) 4 February 2010 (2010-02-04)<br>* abstract *<br>* paragraph [0001] *<br>* paragraph [0003] *<br>* paragraph [0012] *<br>* paragraph [0015] - paragraph [0016] *<br>* paragraph [0027] - paragraph [0030] *<br>* figure 8 * | 1-4 | |
| | ----- | | TECHNICAL FIELDS SEARCHED (IPC)<br><br>H04L |

The present search report has been drawn up for all claims

| Place of search | Date of completion of the search | Examiner |
|---|---|---|
| Munich | 20 April 2011 | Schiffer, Andrea |

EPO FORM 1503 03.82 (P04C01)

**ANNEX TO THE EUROPEAN SEARCH REPORT
ON EUROPEAN PATENT APPLICATION NO.**

EP 10 18 5345

This annex lists the patent family members relating to the patent documents cited in  the above-mentioned European search report.
The members are as contained in the European Patent Office EDP file on
The European Patent Office is in no way liable for these particulars which are merely given for the purpose of information.

20-04-2011

| Patent document cited in search report | Publication date | Patent family member(s) | Publication date |
|---|---|---|---|
| US 2008137720 A1 | 12-06-2008 | NONE | |
| US 2010027702 A1 | 04-02-2010 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. RAJ KUMAR ; GIUSEPPE CAIRE ; ARIS L. MOUSTAKAS.** The Diversity-Multiplexing Tradeoff of Linear MIMO Receivers. *Proc. IEEE Information Theory Workshop (ITW '07,* September 2007